Europäisches Patentamt

European Patent Office

Office européen des brevets

(11) Publication number: **0 438 900 A2**

# EUROPEAN PATENT APPLICATION

(21) Application number: 90313999.6

(51) Int. Cl.⁵: **F16L 58/16**, C09J 7/02

(22) Date of filing: 20.12.90

(30) Priority: **29.12.89 US 459231**

(43) Date of publication of application:
**31.07.91 Bulletin 91/31**

(84) Designated Contracting States:
**BE DE FR GB IT NL**

(71) Applicant: THE KENDALL COMPANY
15 Hampshire Street
Mansfield, Massachusetts 02048(US)

(72) Inventor: Decoste, Leonard D., Jr.
159 Franklin Street
Stoneham, Massachusetts 02180(US)

(74) Representative: Kearney, Kevin David
Nicholas et al
KILBURN & STRODE 30 John Street
London, WC1N 2DD(GB)

(54) **Tape coatings.**

(57) A tape wrap system adapted for protecting tubular articles comprising an innerwrap covering the surface of the article to be protected and an outerwrap placed over said innerwrap, said innerwrap comprising an impact-resistant polyolefin layer carrying a thermosetting adhesive layer on its inner surface, said outerwrap comprising an impact-resistant polyolefin layer having heat fusible properties and/or an heat fusible layer on either or both surfaces thereof, said tape wrap system fusing said innerwrap and outerwrap together when heated and thereafter cooled.

EP 0 438 900 A2

## TAPE COATING

The present invention relates in general to protective coatings of tubular objects and specifically to protective coatings of pipes, and even more particularly to inground pipes.

The art is replete with protective pipeline coatings which provide varying degrees of resistance to impact, mechanical penetration, storage, indentation, abrasion, soil stresses and cathodic disbondment. Four major categories of protective pipeline coating are presently employed by the pipeline industry. They are:

(1) Hot Applied coal-tar enamel and asphalt mastics in relatively thick layers (100 mils (1.3 mms)) and commonly reinforced on the outside with glass or asbestos sheets. While such coatings are reported to represent over half of the plant-applied coatings in the United States, the hazards presented by their use foretell a decreasing popularity of this category. Further, the products show poor impact resistance, poor resistance to mechanical penetration, poor abrasion resistance, poor stability to soil stress conditions, and are only deemed fair in regard to indentation resistance, pipe bending, cathodic disbonding and resistance to hydrocarbon solvents.

(2) Extrusion coatings of a thermoplastic resin: (typically 40 mils (1 mm)). In practice, polyethylene has virtually a monopoly in this area. The technique may involve a seamless tubular extrusion over the pipe or a flat die sheet extrusion wrapped over the pipe. In most cases, the polymer is applied to a first-applied mastic layer (e.g. a bituminous layer). These coatings show improved properties in regard to those mentioned above for the Hot-Applied enamel and coal tar coatings except as concerns resistance to hydrocarbon solvents.

(3) Fusion-bonded coatings - A thermoplastic powder is electrostatically applied to hot pipe where it "melts", adheres to the metal and fuses to itself. Only three basic materials have been widely used - polyethylene, vinyl and epoxy powders with only the latter enjoying commercial success in the United States. Chemically, these are, generally, bis-phenol A polymers with epoxy end groups.

The epoxies require a thermal curing to the thermoset form and usually a catalyst is used in the system (e.g. amines, acids, boron halides, etc.). Frequently a liquid epoxy primer is used prior to the powder coating. Typically epoxy coatings have been 12-14 mils (0.3-0.36 mms) in thickness to provide at least acceptable resistance to cathodic disbonding, although in M.D. Simpson's paper "External Protection of Steel Pipes Using Epoxy Powder Coatings" (contribution SI) presented at the Second International Conference on the Internal and External Protection of Pipes (in England Sept. 1977) he states (page X2) "Bitumen coal tar and polyethylene are required to be applied relatively thick, but epoxy powder coatings give excellent protection with only 3 mm of coatings."

Apparently and obviously "3 mm" should be -0.3 MM-(12 mils) nevertheless, this value (i.e. 0.3 MM) still represents a relatively thick coating and it has attendant disadvantages, e.g. brittleness and lack of flexibility and stresses at the pipe-epoxy interface.

In order to effect a satisfactory epoxy coating which would have satisfactory resistance to impact, mechanical penetration, indentation, abrasion, soil stresses, and cathodic disbondment it has been accepted that an about 12-14 mil (0.3 - 0.36 mm) thickness coating is required, which is very costly to produce, as well as being subject to the previously memtioned disadvantages.

(4) Tape Coating Systems (typically 20-80 mils (0.5 - 2.0 mms) thick). This method entails spirally wrapping a corrosion protective tape around a rubber based primer coating, referred to in the art as the innerwrap, followed by applying a second plastic outerwrap tape in a similar fashion to the innerwrap.

Many improvements on this tape coating system involving an inner and an outer wrap, have been advanced all of which have as their essence the primary task of promoting a tight bond thereby creating a coating which insulates the pipe from degradative external forces.

Accordingly, some tapes comprise polyethylene backings with a pressure-sensitive adhesive, or primer-activated adhesive coating thereon. The properties exhibited by these pipe coatings are similar to those of extrusion coated pipe coatings.

U.S. Patent No. 4,213,486 issued to Samour et al. and assigned to the present assignee, discloses a polyethylene outerwrap carrying a means for effecting bonding to the innerwrap epoxy layer wherein the means may be a hot melt adhesive or a pressure-sensitive adhesive.

U.S. Patent No. 3,874,418 issued at Hielema and assigned to the present assignee discloses:
"A method of coating a pipe and a pipe coated thereby, said method comprising the steps of progressively spirally winding a corrosion protective adhesive coated plastic tape onto the outer surface of the pipe with a spiral overlap, covering the coated pipe by progressively winding a film thereon with a predetermined overlap, and, as the film is wound onto the coated pipe, introducing and distributing under pressure a hot melted adhesive into intimate contact with the surface of the marginal portion of the trailing edge of the film and the surfaces of the overlapped portion along the leading edge thereof and of the portion of the tape immediately adjacent the leading edge of the film."

Still a further advancement in the art of tape coat systems is disclosed in U.S. Patent No. 4,806,400 issued to Sancaktar and assigned to the present assignee, wherein the improvement consists of tapering the opposed edges of the tape to enhance a tighter closure by being less subject to soil stress.

While all the aforementioned tape coat systems provide for successful protective coatings, they still comprise separate layers. Accordingly, the task of the present invention can be described as being directed to improving the present tape pipewrap systems against degradative external forces by providing for a continuous and seamless protective tape coating system.

In accordance with the present invention, the aforementioned task is solved in a simple and elegant manner by heat fusing a polymeric outerwrap to a polymeric innerwrap tape coating, by incorporating an heat fusible material into said inner and outer wrap, which when heated and cooled forms a completely closed protective tape coating.

As mentioned previously, the present invention relates in general to protective coatings of tubular objects and specifically to protective tape coatings for inground pipes.

Accoprding to one aspect of the present invention a tape coating adapted for protecting tubular articles comprises an innerwrap covering the surface of the article to be protected and an outerwrap adapted to be placed over the said innerwrap, the said innerwrap comprising an impact-resistant polyolefin layer carrying an adhesive layer on its inner surface or both surfaces thereof, the said outerwrap comprising an impact-resistant polyolefin layer having heat fusible properties and/or an heat fusible layer on either or both surfaces thereof, the said tape coating being such that when the said outerwrap is wrapped over the innerwrap there is a layer of adhesive or a heat fusible layer or surface disposed between the outerwrap and the innerwrap, the said innerwrap and outerwrap thus being adapted to fuse together when heated.

The impact resistant polyolefin layers may be of polyethylene, e.g. a mixture of low and high density polyethylene. The impact resistant polyethylene layers may be from about 5.0 to about 30.0 mils (0.13 to 0.78 mms) thick.

The adhesive layer may be a thermosetting adhesive. The adhesive layer may be from about 2.0 to about 20.0 mils (0.05 to 0.51 mms) thick.

The heat fusible layer may be vinyl acetate, ethyl vinyl acetate, ethylene vinyl acetate, ethyl methyl acrylate, or low density polyethylene. The heat fusible layer may be from about 0.5 to about 10.5 mils (0.013 to 0.26 mms) thick.

In a preferred embodiment the innerwrap consists of an impact resistant layer of polyolefin which is a mixture of low density and high density polyethylene and which is from 5 to 30 mils (0.13 to 0.78 mms) thick and carries on each face a thermosetting adhesive selected from butyl rubber, natural rubber, a styrene butadiene rubber or mixtures thereof, the adhesive layers being 2 to 20 mils (0.05 to 0.51 mms) thick, and the outerwrap consists of an impact resistant layer of polyolefin which is a mixture of low density and high density polyethylene and which is from 5 to 30 mils (0.13 to 0.78 mms) thick, and carries on each face a heat fusible material which is ethyl vinyl acetate, methyl acrylate or low density polyethylene, the heat fusible layers being from 0.5 to 10 mils (0.013 to 0.25 mms) thick.

The invention also extends to a process for coating a pipe, comprising the steps of:

(a) applying an innerwrap in accordance with the present invention to the outer surface of the said pipe;

(b) applying an outerwrap in accordance with the present invention over the said innerwrap; and

(c) heating the assembly of inner and outer wraps on the pipe, the arrangement being such that the said innerwrap and outerwrap fuse together and thereafter cooling the assembly

The novel coating system of this invention comprises a polymeric innerwrap and a polymeric outerwrap. The polymeric innerwrap is desirably an C/B/C layered construction. The B layer consists essentially of an impact resistant polyolefin material, preferably polyethylene, and most preferably a mixture of low and high density polyethylene from about 5.0 to about 30.0 mils (0.13 to 0.78 mms) thick; and the C layer consists essentially of an adhesive, preferably a thermosetting adhesive from about 2.0 to about 20.0 mils (0.051 to 0.51 mms) thick. Exemplary thermosetting adhesives are thermosetting rubber-based adhesives such as butyl rubber, natural rubber and styrene butadiene, butyl rubber and styrene butadiene, as well as thermoplastic rubber polymers designed for use without vulcanization, for example materials such as those sold by the Shell Chemical Company under the Trade Mark Kraton.

The novel outerwrap comprises a layer of A or B'B" or AB or BA or A/B/A. The layer's construction corresponds to the aforementioned description plus B' corresponds to low density polyethylene and B" corresponds to high density polyethylene and A consists essentially of an heat fusible material from about 0.5 to about 10.0 mils (0.013 to 0.25 mms) thick; preferred heat fusible materials are ethyl vinyl acetate, ethyl methyl acrylate, and low density polyethylene, with ethyl vinyl acetate being particularly preferred. The most preferred embodiment comprises an ABA layer construction wherein both the A layers each are from about 0.5 to about 10.0 mils (0.013 to 0.25 mms) thick, the B layer is from about 5.0 to about 30.0 mils (0.13 to 0.78 mms) thick. The manufacture of such coatings is well known in the art comprising such well known processes as calendering, extrusion and coextrusion, and as such comprises no part of the present invention. Notably, layers A, B and C in the inner and outer wrap can be the same or different materials and/or the same material yet in different concentrations, while remaining within the general aforementioned categories.

The invention also extends to the innerwrap per se and to the outerwrap per se.

The general process of producing a tape coating system comprising the novel invention includes well known plant tape coating methods. The pipe may be first preheated to approximately 200°F (93°C) and then prepared by any of the conventional ways known in the art such as by shot or grit blasting. Primer is then applied to the pipe by way of well known processes such as spraying or brushing. Next, the pipe is coated with the C/B/C innerwrap by progressively spirally winding the said tape onto the outer surface of the pipe thereby maintaining a marginal overlap. Outerwrap A/B/A is then applied to cover the coated pipe by progressively winding the said A/B/A tape onto the innerwrap coated pipe with a predetermined overlap. Lastly, flame or oven heat is applied to the coated pipe to attain a tape temperature ranging from about 225°F to about 325°F (107 to 163°C). Thereafter the pipe is cooled by any of the known methods, exemplary of which is water cooling.

In accordance with this novel process, the outerwrap is completely heat fused to the innerwrap thereby forming a uniform, continuous, and completely closed protective coating which fully protects against external degradative forces. More specifically, the ethylene vinyl acetate layers namely layers A are heat fused thereby creating a tight bond between the inner and outer wrap so as to achieve essentially a one layer seamless coating. The said seamless coating is highly advantageous in that no openings are present which when subjected to external forces create potential portals of entry for pipe corrosion factors. In sum, the present invention provides for a completely closed internal pipewrap environment which advantageously maintains pipe integrity.

The invention may be put into practice in various ways and a number of specific embodiments will be described to illustrate the invention with reference to the accompanying examples.

In Table 1 below the composition and structure of the outer wrap is given for each example. The innerwrap used had the same composition and structure in each example, namely a C/B/C construction as described above.

## Table 1

| Example | Material | Thickness (mils) | (mms) |
|---------|----------|------------------|-------|
| I | Ethylene Vinyl Acetate | 5 | 0.13 |
| | Blend of High and Low | | |
| | Density Polyethylene | 27.5 | 0.69 |
| | Ethylene Vinyl Acetate | 6 | 0.15 |
| II | Ethylene Methyl Acrylate | 4.5 | 0.11 |
| | Polyethylene | 27.5 | 0.69 |
| | Ethylene Methyl Acrylate | 5 | 0.13 |
| III | Ethylene Vinyl Acetate | 8.7 | 0.22 |
| | Polyethylene | 14.5 | 0.36 |
| | Ethylene Vinyl Acetate | 9.3 | 0.23 |
| IV | Ethylene Methyl Acrylate | 9.1 | 0.23 |
| | Polyethylene | 13.3 | 0.33 |
| | Ethylene Methyl Acrylate | 10.2 | 0.26 |
| V | Low Density Polyethylene | 9.6 | 0.24 |
| | Blend of High and Low | | |
| | Density Polyethylene | 12.8 | 0.32 |
| | Low Density Polyethylene | 10 | 0.25 |

Coatings were prepared by the process described above. The coatings of Examples I to V were then subjected to the Lap Shear and T Peel Testing methods set out in detail in the 1989 Annual Book of ASTM Standards. In this manner the bond between two overlapping novel outerwrap segments was compared to a single intact piece of the same material.

The following data set out in Tables 2 and 3 illustrates the advantageous characteristics of the novel invention and consequently the longevity and integrity of a pipe coated with the novel invention.

EP 0 438 900 A2

## TABLE 2A

| | Lap Shear Tensile Strength | Force at Yield (lbs/in width) | Force at Yield (Kgs/cm width) | Elong. at Yield (%) |
|---|---|---|---|---|
| Example I | 5%* | 68.5 + 0.4 | | 7.0 + 0.9 |
| | 20% | 69.1 + 0.2 | | 7.8 + 1.0 |
| Example II | 5% | 70.1 + 1.0 | | 7.3 + 0.3 |
| | 20% | 72.0 + 0.7 | | 7.2 + 0.3 |
| Example III | 5% | 47.1 + 0.2 | | 10.5 + 0.0 |
| | 20% | 44.2 + 0.6 | | 10.0 + 0.0 |
| Example IV | 5% | 48.4 + 1.1 | | 10.8 + 0.8 |
| | 20% | 42.6 + 1.2 | | 11.2 + 1.3 |
| Example V | 5% | 48.2 + 0.6 | | 11.0 + 0.0 |
| | 20% | 48.2 + 1.1 | | 11.5 + 1.3 |
| Control | | | | |
| Example I | 20% | 73.1 + 0.8 | | 19.7 + 1.3 |
| Example II | 5% | 71.0 + 1.4 | | 17.7 + 0.9 |
| Example III | 5% | 47.1 + 1.2 | | 18.3 + 0.5 |
| Example IV | 5% | 45.0 + 3.8 | | 20.3 + 0.9 |
| Example V | 5% | 50.7 + 0.5 | | 16.3 + 0.6 |

EP 0 438 900 A2

## TABLE 2B

| | Lap Shear Tensile Strength | Force at Break (lbs/in width) | Force at Break (Kgs/cm width) | Elong. at Break (%) |
|---|---|---|---|---|
| Example I | 5%* | 53.0 + 4.4 | | 51.7 + 44.1 |
| | 20% | 50.8 + 1.2 | | 79.2 + 37.0 |
| Example II | 5% | 53.4 + 7.5 | | 39.0 + 17.4 |
| | 20% | 49.7 + 0.6 | | 44.3 + 17.9 |
| Example III | 5% | 50.3 + 2.2 | | 343.0 + 22.1 |
| | 20% | 48.7 + 3.8 | | 391.3 + 18.6 |
| Example IV | 5% | 45.5 + 2.1 | | 200.3 + 148.6 |
| | 20% | 41.0 + 3.6 | | 218.7 + 180.1 |
| Example V | 5% | 43.6 + 0.7 | | 177.7 + 71.0 |
| | 20% | 45.5 + 0.4 | | 437.7 + 22.0 |
| Control | | | | |
| Example I | 20% | 72.1 + 1.7 | | 262.7 + 103.4 |
| Example II | 5% | 72.5 + 1.9 | | 422.1 + 19.0 |
| Example III | 5% | 82.5 + 7.8 | | 599.9 + 64.2 |
| Example IV | 5% | 64.9 + 4.6 | | 545.3 + 53.8 |
| Example V | 5% | 62.7 + 7.3 | | 504.3 + 20.2 |

## TABLE 3

| T-Peel | | (oz./in. width) ( g/cm width) |
|---|---|---|
| Example I | 20%* | 69.3 + 46.7 |
| Example II | 20% | 20.7 + 2.0 |
| Example III | 20% | 168.7 + 28.7 |
| Example IV | 20% | 207.3 + 17.0 |
| Example V | 20% | 59.3 + 16.2 |

Notes on Tables 2 and 3

* means in each example the Bonding speed. Listed as a percentage of full capacity which equals 56 FPM (feet per minute) (17 m/min). Bonding speed is the speed used in the test method.

These test results demonstrate the novel and advantageous characteristics namely secured bonding of overwrap to innerwrap and hence resistance to external degradative forces.

By way of recapitulation, heat fusing polymeric outerwrap tape to a polymeric innerwrap tape by incorporating an heat fusible moiety in both layers, advantageously prolongs the integrity and hence longevity of inground pipes.

Since certain changes may be made without departing from the scope of the invention herein described, it is intended that all matter contained in the foregoing description, including the examples, shall be taken as illustrative and not in a limiting sense.

## Claims

1. A tape coating adapted for protecting tubular articles comprising an innerwrap covering the surface of the article to be protected and an outerwrap adapted to be placed over the said innerwrap, the said innerwrap comprising an impact-resistant polyolefin layer carrying an adhesive layer on its inner surface or both surfaces thereof, the said outerwrap comprising an impact-resistant polyolefin layer having heat fusible properties and/or an heat fusible layer on either or both surfaces thereof, the said tape wrap system fusing the said innerwrap and outerwrap together when heated and thereafter cooled.

2. A tape coating as claimed in Claim 1, in which the impact resistant polyolefin layers are polyethylene.

3. A tape coating as claimed in Claim 2, in which the polyethylene is a mixture of low and high density polyethylene.

4. A tape coating as claimed in Claims 1, 2 or 3, in which the impact resistant polyethylene layers are from about 5.0 to about 30.0 mils (0.13 to 0.78 mms) thick.

5. A tape coating as claimed in Claim 1, 2, 3 or 4, in which the adhesive layer is a thermosetting adhesive.

6. A tape coating as claimed in any one of Claims 1 to 5 in which the adhesive layer is from about 2.0 to about 20.0 mils (0.05 to 0.51 mms) thick.

7. A tape coating as claimed in any one of Claims 1 to 6 in which the heat fusible layer is vinyl acetate, ethyl vinyl acetate, ethylene vinyl acetate, ethyl methyl acrylate, or low density polyethylene.

8. A tape coating as claimed in any one of Claims 1 to 8 in which the heat fusible layer is from about 0.5 to about 10.5 mils (0.013 to 0.26 mms) thick.

9. A pipe coating system as claimed in any one of Claims 1 to 8 in which the innerwrap consists of an impact resistant layer of polyolefin which is a mixture of low density and high density polyethylene and which is from 5 to 30 mils (0.13 to 0.78 mms) thick and carries on each face a thermosetting adhesive selected from butyl rubber, natural rubber, a styrene butadiene rubber or mixtures thereof, the adhesive layers being 2 to 20 mils (0.05 to 0.51 mms) thick, and in which the outerwrap consists of an impact resistant layer of polyolefin which is a mixture of low density and high density polyethylene and which is from 5 to 30 mils (0.13 to 0.78 mms) thick, and carries on each face a heat fusible material which is ethyl vinyl acetate, methyl acrylate or low density polyethylene, the heat fusible layers being from 0.5 to 10 mils (0.013 to 0.25 mms) thick.

10. A process for coating a pipe, comprising the steps of:
(a) applying an innerwrap as claimed in any one of Claims 1 to 9 to the outer surface of the said pipe;
(b) applying an outerwrap as claimed in any one of Claims 1 to 9 over the said innerwrap;
(c) heating the assembly of inner and outer wraps on the pipe, the arrangement being such that the said innerwrap and outerwrap fuse together and thereafter cooling the assembly.

11. A pipe coating system comprising a tape coating adapted for protecting pipe comprising an innerwrap covering the surface of the pipe and an outerwrap placed over the said innerwrap, the said innerwrap comprising an impact-resistant polyolefin layer carrying an adhesive layer on its inner surface or both surfaces thereof, the said outerwrap comprising an impact-resistant polyolefin layer having heat fusible properties and/or an heat fusible layer on either or both surfaces thereof, the said tape wrap system fusing the said innerwrap and outerwrap together when heated and thereafter cooled.

12. A pipe coating system comprising a tape coating adapted for protecting pipe comprising an innerwrap covering the surface of the pipe and an outerwrap placed over the said innerwrap, the said innerwrap comprising an impact-resistant polyethylene layer carrying a thermosetting adhesive layer on its inner surface or both surfaces thereof, the said outerwrap comprising an impact-resistant polyethylene layer carrying a heat fusible layer on either or both surfaces thereof, the said pipe wrap coating fusing the said innerwrap and outerwrap together when heated and thereafter cooled.

13. A pipe coating system as claimed in Claim 11 or Claim 12 in which the heat fusible layer is vinyl acetate, ethyl methyl acrylate, or low density polyethylene.

14. A pipe coating system as claimed in Claim 13 in which the heat fusible layer is ethyl vinyl acetate.